(19) Europäisches Patentamt
European Patent Office
Office européen des brevets

(11) EP 2 641 988 B1

(12) EUROPEAN PATENT SPECIFICATION

(45) Date of publication and mention
of the grant of the patent:
18.03.2020 Bulletin 2020/12

(51) Int Cl.:
C22C 38/02 (2006.01)      C22C 38/04 (2006.01)
C22C 38/24 (2006.01)      C22C 38/42 (2006.01)
C22C 38/44 (2006.01)      C22C 38/46 (2006.01)
C22C 38/06 (2006.01)      C22C 38/20 (2006.01)
C22C 38/22 (2006.01)      C21D 1/18 (2006.01)
C21D 9/04 (2006.01)       C21D 6/00 (2006.01)

(21) Application number: 11841233.7

(22) Date of filing: 18.11.2011

(86) International application number:
PCT/JP2011/076695

(87) International publication number:
WO 2012/067237 (24.05.2012 Gazette 2012/21)

(54) **WHEEL**

RAD

ROUE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 18.11.2010 JP 2010257440

(43) Date of publication of application:
25.09.2013 Bulletin 2013/39

(73) Proprietor: Nippon Steel Corporation
Tokyo 100-8071 (JP)

(72) Inventors:
• YAMAMOTO, Yuichiro
Osaka-shi
Osaka 541-0041 (JP)
• TAKESHITA, Yukiteru
Osaka-shi
Osaka 541-0041 (JP)
• KATO, Takanori
Osaka-shi
Osaka 541-0041 (JP)
• KIRIYAMA, Kentaro
Osaka-shi
Osaka 541-0041 (JP)

(74) Representative: Zimmermann & Partner
Patentanwälte mbB
Postfach 330 920
80069 München (DE)

(56) References cited:
EP-A1- 1 541 377          EP-A1- 2 135 966
JP-A- 54 017 316          JP-A- 57 143 469
JP-A- 63 277 721          JP-A- H10 195 601
JP-A- H11 350 065         JP-A- S57 143 469
JP-A- 2000 129 397        JP-A- 2002 363 701
JP-A- 2003 129 180        JP-A- 2005 350 769
US-A- 5 658 400           US-A- 5 899 516
US-A1- 2005 268 995       US-B1- 6 372 057
US-B2- 7 559 999

• DATABASE WPI Week 200971 Thomson
Scientific, London, GB; AN 2009-Q56716
XP002727860, & RU 2 369 658 C1 (RUSSIA
RAILWAYS STOCK CO) 10 October 2009
(2009-10-10)

**Description**

**TECHNICAL FIELD**

The present invention relates to a wheel. More particularly, the present invention relates to a high-hardness wheel for railroad, being excellent in wear resistance, rolling contact fatigue resistance, and spalling resistance.

Spalling is a phenomenon that a portion of wheel, when heated and rapidly cooled by emergency braking or the like, is transformed into brittle martensite called a white layer, from which a crack propagates, and the white layer is subjected to brittle fracture and peels off. This phenomenon is also called a "thermal crack" in some cases.

**BACKGROUND ART**

In recent years, with a worldwide increase in running distance and loading capacity, a wheel for railroad (hereinafter, also referred to as a "wheel") having a service life longer than before has been demanded.

There are three phenomena that mainly cause damages to a wheel: (i) wear, (ii) rolling contact fatigue, and (iii) spalling. Especially in recent years, an increasing number of wheels have been damaged by wear resulting from the increase in running distance and by rolling contact fatigue resulting from the increase in loading capacity. The rolling contact fatigue is sometimes called "shelling". Although the crack caused by spalling is also called "shelling" in some cases, in this description, the generation of crack caused by the formation of white layer is defined as "spalling".

Empirically, it is known that the wear resistance and the rolling contact fatigue resistance are properties that are incompatible with the spalling resistance. A pressing need is to develop steel for wheel that is excellent in balance between the wear resistance, rolling contact fatigue resistance and the spalling resistance, and can give a long life to the wheel.

For example, Patent Documents 1 to 7 disclose techniques concerning a wheel.

Patent Document 1 discloses a "steel for high-toughness railroad wheel" containing V.

Patent Document 2 discloses a "rim or monoblock wheel for wheel set of railway rolling stock" that is excellent in wear resistance, fracture resistance and thermal crack resistance.

Patent Document 3 discloses a "wheel for rolling stock" in which the C content is decreased, and the tread part thereof has a structure composed of bainitic structure, tempered martensitic structure, or a mixed structure of bainite and tempered martensite, whereby both of the shelling resistance and the spalling resistance serving as thermal crack resistance are improved.

Patent Document 4 discloses a "high carbon rail vehicle wheel having excellent wear resistance and thermal crack resistance" in which the C content is increased to 0.85 to 1.20%.

Patent Document 5 discloses a "wheel for rolling stock excellent in wear resistance and thermal crack resistance" of an monoblock type formed of steel having a chemical composition consisting of C: 0.4 to 0.75%, Si: 0.4 to 0.95%, Mn: 0.6 to 1.2%, Cr: more than 0% and less than 0.2%, P: 0.03% or less, and S: 0.03% or less, the balance being Fe and impurities, wherein the region at least to a depth of 50 mm from the surface of a wheel tread part is formed of a pearlitic structure, and the document also discloses the production of the wheel.

Patent Documents 6 and 7 disclose "railroad wheel steels" in which the strength is increased and the rolling contact fatigue resistance and spalling resistance are improved by containing 0.01 to 0.12% and 0.009 to 0.013%, respectively, of Nb.

[Patent Document 1] JP50-104717A
[Patent Document 2] JP2001-158940A
[Patent Document 3] JP2005-350769A
[Patent Document 4] JP2004-315928A
[Patent Document 5] JP9-202937A
[Patent Document 6] US7559999A
[Patent Document 7] US7591909A

JPS57 143469 A discloses a steel for a railroad wheel with superior wear resistance and enhanced cracking loss resistance. This steel is rolled into a wheel and used as rolled without carrying out heat treatment.

## DISCLOSURE OF THE INVENTION

### Problems to be Solved by the Invention

The steel disclosed in Patent Document 1 has a low hardness because the C content thereof is as low as 0.50 to 0.60%. Therefore, this steel does not have sufficient rolling contact fatigue resistance, and cannot respond to the recent increase in loading capacity.

The steel disclosed in Patent Document 2 has a low hardness because the C content thereof is as low as 0.45 to 0.55%. Therefore, this steel also does not have sufficient rolling contact fatigue resistance, and cannot respond to the recent increase in loading capacity.

The wheel disclosed in Patent Document 3 is a wheel in which the tread part thereof has a structure composed of bainitic structure, tempered martensitic structure, or a mixed structure of bainite and tempered martensite. Therefore, despite its high strength, the wear resistance is lower than the case where the tread part is formed of pearlitic structure, and it is difficult to obtain wear resistance higher than that of a wheel material for a conventional freight car. That is, as compared with the pearlitic structure that is excellent in work hardening property and further shows a behavior in which the lamella thereof is rearranged in parallel to the surface as amount of wear increases, the bainitic structure and the tempered martensitic structure provide a large amount of wear (for example, refer to Sadahiro Yamamoto, "Technique for Improving Wear Resistance of Steel by Structure Control - Structure Control Technique for Wear-Resistant Steel having Weldability -" 161st-162nd Nishiyama Memorial Seminar, Heisei 8th year, edited by The Iron and Steel Institute of Japan, p.221).

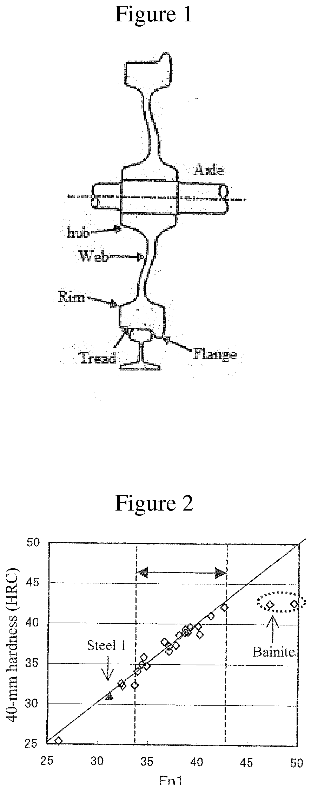

The steel for the wheel disclosed in Patent Document 4 has difficulty in being applied to a wheel manufactured by treatment unique to wheel called a "tread quenching process". Figure 1 is a schematic view of an "monoblock wheel" shown as one example of wheel. In the case of wheel, after the whole of the wheel has been heated, heat treatment for cooling the rim part thereof from the outer surface of wheel is performed to give a compressive residual stress to the rim part. In this cooling treatment, the rim part and the vicinity thereof are cooled rapidly, but the hub part thereof suffers from low cooling rate. Therefore, in the case where the steel for the wheel disclosed in this Patent Document is heat-treated by the tread quenching process, hypereutectoid cementite may precipitate at the austenite grain boundary of the hub part. The hypereutectoid cementite acts in the same way as that of coarse inclusions, and greatly reduces the toughness and the fatigue life (for example, refer to Takayoshi Murakami, "Influence of Minute Defects and Inclusions (2004)", p.182 "Yokendo").

The wheel disclosed in Patent Document 5 may have insufficient hardness. Therefore, this wheel is not always capable of responding to the recent increase in loading capacity.

The railroad wheel steel disclosed in Patent Document 6 contains as much as 0.20 to 0.30% of Mo. Therefore, a structure having low wear resistance such as bainitic structure or degenerate-pearlitic structure is liable to be produced, so that it is difficult to obtain good wear resistance. Moreover, this steel always contains 0.01 to 0.12% of Nb. In the steel containing Nb, coarse inclusions may be formed, so that the coarse inclusions extremely reduce the toughness and the fatigue life similarly to the above-described hypereutectoid cementite.

Similarly, the railroad wheel steel disclosed in Patent Document 7 always contains 0.009 to 0.013% of Nb. As described above, in the steel containing Nb, coarse inclusions may be formed, so that the coarse inclusions extremely reduce the toughness and the fatigue life similarly to the hypereutectoid cementite.

The present invention has been made to solve the above-described problems, and accordingly an objective thereof is to provide a wheel that is excellent in balance between the wear resistance, rolling contact fatigue resistance and spalling resistance, with a long life.

### Means for Solving the Problems

The present inventors conducted various studies on the wear resistance, rolling contact fatigue resistance, and spalling resistance, and resultantly found the following items (a) to (c).

   (a) The wear resistance increases when the structure of steel material is pearlitic structure and the hardness is increased.
   (b) The rolling contact fatigue resistance increases when the hardness is increased regardless of structure.
   (c) The spalling resistance increases when the hardenability is decreased.

From these findings, the present inventors arrived at a conclusion that in order to solve the above-described problems, steel in which the pearlitic structure can be provided by tread quenching, and moreover, the hardness is high and the hardenability is low only needs to be developed.

Hereunder, one example of studies conducted by the present inventors is explained in detail.

The present inventors evaluated the influence of elements on the hardness and hardenability by the Jominy end quenching test (hereinafter, referred to as the "Jominy test") in which the heat treatment conditions thereof are similar to those of the tread quenching of actual wheel.

First, ingots were produced by melting steels 1 to 24 having chemical compositions given in Table 1 in a vacuum furnace on the laboratory scale.

Next, for each of the steels, a 35-mm diameter round bar, a 160-mm diameter round bar, and a 70-mm diameter round bar were produced from the ingot by hot forging.

Further, for steel 1, a 220-mm diameter round bar was also produced to prepare a "rail test specimen" for the later-described rolling contact fatigue test.

Steel 1 in Table 1 corresponds to a railroad wheel steel of "Class C" in M-107/M-207 standards of AAR (Association of American Railroads).

Table 1

| Steel | Chemical composition (mass%) Balance: Fe and impurities | | | | | | | | | | |
|---|---|---|---|---|---|---|---|---|---|---|---|
| | C | Si | Mn | P | S | Cu | Ni | Cr | Mo | V | Al |
| 1 | 0.69 | 0.29 | 0.82 | 0.013 | 0.007 | 0.01 | 0.02 | 0.08 | 0.01 | 0.01 | 0.056 |
| 2 | 0.69 | 0.80 | 0.76 | 0.011 | 0.007 | - | 0.03 | 0.10 | 0.01 | 0.01 | 0.050 |
| 3 | 0.70 | 0.82 | 0.82 | 0.004 | 0.008 | - | 0.04 | 0.09 | 0.01 | 0.10 | 0.034 |
| 4 | 0.77 | 0.83 | 0.82 | 0.004 | 0.007 | - | 0.04 | 0.09 | 0.01 | 0.09 | 0.036 |
| 5 | 0.86 | 0.85 | 0.83 | 0.004 | 0.008 | - | 0.04 | 0.10 | 0.01 | 0.01 | 0.037 |
| 6 | 0.88 | 0.50 | 0.61 | 0.004 | 0.008 | - | 0.04 | 0.25 | 0.01 | 0.01 | 0.034 |
| 7 | 0.74 | 0.80 | 0.39 | 0.004 | 0.008 | - | 0.04 | 0.45 | 0.01 | 0.09 | 0.033 |
| 8 | 0.71 | 0.79 | 0.77 | 0.014 | 0.007 | 0.01 | 0.02 | 0.10 | 0.01 | 0.09 | 0.036 |
| 9 | 0.80 | 0.78 | 0.76 | 0.014 | 0.006 | 0.01 | 0.02 | 0.10 | 0.01 | 0.09 | 0.039 |
| 10 | 0.63 | 0.79 | 0.79 | 0.014 | 0.009 | 0.01 | 0.02 | 0.10 | 0.01 | 0.09 | 0.037 |
| 11 | 0.72 | 0.23 | 0.18 | 0.003 | 0.001 | 0.01 | 0.01 | - | 0.01 | - | 0.031 |
| 12 | 0.72 | 0.25 | 0.77 | 0.003 | 0.001 | 0.01 | 0.01 | 0.19 | 0.01 | - | 0.021 |
| 13 | 0.76 | 0.25 | 0.78 | 0.003 | 0.001 | 0.01 | 0.01 | - | 0.09 | - | 0.031 |
| 14 | 0.75 | 0.25 | 0.79 | 0.004 | 0.001 | 0.01 | 0.01 | - | 0.20 | - | 0.035 |
| 15 | 0.74 | 0.23 | 0.74 | 0.003 | 0.001 | 0.01 | 0.01 | - | 0.01 | 0.09 | 0.026 |
| 16 | 0.74 | 0.79 | 0.80 | 0.004 | 0.001 | 0.01 | 0.01 | - | 0.01 | 0.05 | 0.034 |
| 17 | 0.75 | 0.86 | 0.79 | 0.004 | 0.001 | 0.01 | 0.01 | 0.15 | 0.15 | - | 0.041 |
| 18 | 0.75 | 0.81 | 0.82 | 0.003 | 0.001 | 0.01 | 0.02 | 0.42 | 0.07 | 0.07 | 0.023 |
| 19 | 0.74 | 0.65 | 0.82 | 0.004 | 0.001 | 0.01 | 0.02 | 0.54 | 0.11 | - | 0.032 |
| 20 | 0.74 | 1.10 | 0.82 | 0.003 | 0.001 | 0.01 | 0.01 | - | 0.01 | - | 0.041 |
| 21 | 0.74 | 0.23 | 2.10 | 0.004 | 0.001 | 0.01 | 0.01 | - | 0.01 | - | 0.038 |
| 22 | 0.73 | 0.25 | 0.81 | 0.003 | 0.001 | 0.01 | 0.01 | - | 0.01 | 0.21 | 0.028 |
| 23 | 0.75 | 0.79 | 0.83 | 0.003 | 0.001 | 0.01 | 0.02 | 0.82 | 0.18 | - | 0.026 |
| 24 | 0.74 | 0.84 | 0.82 | 0.004 | 0.001 | 0.01 | 0.02 | 0.54 | 0.25 | 0.08 | 0.031 |

A Jominy test specimen was sampled from the 35-mm diameter round bar. The test specimen was austenitized at 900°C for 30 minutes in the atmosphere, and thereafter was subjected to end quenching. Then, the measurement of Rockwell C hardness (hereinafter, also referred to as "HRC") was made by 1.0-mm parallel cutting.

The HRC at a position 40 mm distant from the water cooling end (hereinafter, referred to as the "40-mm hardness") was measured, and the influence of elements on the measurement value was evaluated. As the result, it was found that the "40-mm hardness" has a proportional relationship with Fn1 expressed by Formula (1) as shown in Figure 2. Further, it was found that, similarly to steels 23 and 24, if Fn1 exceeds 43, bainitic structure is formed at least in a portion, and the proportional relationship does not hold.

The reason why the HRC at the position 40 mm distant from the water cooling end was measured is that the wheel is manufactured by being machined after tread quenching. Also, the reason for this is that the wheel having been used is subsequently re-profiled, and is sometimes used by repeating re-profiled work, and the properties of steel in the interior having a hardness lower than that of the surface exerts a great influence on the service life of wheel.

In Figure 2, steel 1 corresponding to the railroad wheel steel of "Class C" of AAR was indicated by a mark "▲".

The structure was decided by observation under an optical microscope by mirror grinding the position 40 mm distant from the water cooling end and thereafter corroding that position with nital.

$$Fn1 = 2.7 + 29.5 \times C + 2.9 \times Si + 6.9 \times Mn + 10.8 \times Cr + 30.3 \times Mo + 44.3 \times V \ldots (1)$$

in which C, Si, Mn, Cr, Mo and V each mean the content in percent by mass of the element.

Table 2 gives the measurement value of the "40-mm hardness" and Fn1 expressed by Formula (1) that are put in order.

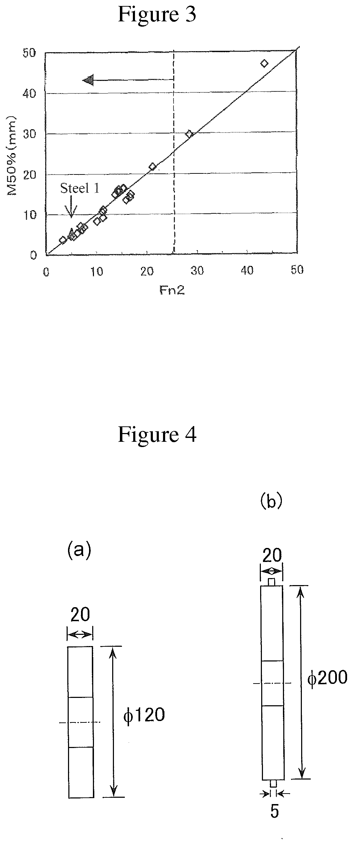

The hardenability was evaluated, based on the hardness in the case where the martensitic structure fraction described in ASTM A255 standards was 50%, by measuring a distance in millimeter units from the water cooling end at which distance the martensitic structure fraction is 50% (hereinafter, referred to as "M50%") from the Jominy hardness. As the result, it was found that "M50%" is correlated with Fn2 expressed by Formula (2) as shown in Figure 3. In Figure 3 as well, steel 1 was indicated by a mark "▲".

$$Fn2 = \exp(0.76) \times \exp(0.05 \times C) \times \exp(1.35 \times Si) \times \exp(0.38 \times Mn) \times \exp(0.77 \times Cr) \times \exp(3.0 \times Mo) \times \exp(4.6 \times V) \ldots (2)$$

in which C, Si, Mn, Cr, Mo and V also each mean the content in percent by mass of the element. The term of "exp (0.05 × C)" and the like mean exponential expressions such as "$e^{0.05 \times C}$". The letter of "e" is one of mathematical constants: "Napier's number", and is used as the base of natural logarithm.

Table 2 gives the measurement value of the "M50%" and Fn2 expressed by Formula (2) that are put in order.

Table 2

| Steel | 40-mm hardness (HRC) | Fn1 | M 50% (mm) | Fn2 | Rolling contact fatigue life (cycle) | Wear amount (g) |
|---|---|---|---|---|---|---|
| 1 | 31.1 | 31.2 | 5.6 | 5.1 | 1830898 | 0.320 |
| 2 | 32.3 | 32.4 | 8.3 | 10.1 | 2191425 | 0.312 |
| 3 | 36.6 | 37.1 | 13.6 | 16.0 | 3283349 | 0.268 |
| 4 | 39.3 | 38.7 | 16.5 | 15.5 | 4453779 | 0.242 |
| 5 | 38.6 | 38.1 | 10.6 | 11.2 | 4114188 | 0.241 |
| 6 | 37.3 | 37.8 | 6.3 | 7.2 | 3675793 | 0.249 |
| 7 | 38.9 | 38.7 | 14.2 | 16.7 | 4342381 | 0.225 |
| 8 | 37.8 | 36.6 | 16.2 | 14.5 | 3688978 | 0.247 |
| 9 | 39.6 | 39.2 | 15.7 | 14.3 | 4480886 | 0.241 |
| 10 | 35.0 | 34.4 | 15.5 | 14.6 | 2867978 | 0.279 |
| 11 | 25.4 | 26.2 | 3.8 | 3.3 | 814399 | 0.384 |
| 12 | 32.6 | 32.3 | 4.6 | 5.0 | 2138325 | 0.312 |
| 13 | 34.1 | 34.0 | 4.5 | 5.5 | 2583220 | 0.286 |
| 14 | 37.2 | 37.1 | 6.8 | 7.7 | 3602246 | 0.253 |
| 15 | 35.8 | 34.6 | 5.4 | 6.3 | 3089949 | 0.263 |
| 16 | 34.8 | 34.9 | 9.2 | 11.3 | 2785571 | 0.279 |
| 17 | 38.9 | 38.9 | 15.0 | 16.8 | 4258560 | 0.242 |
| 18 | 42.1 | 42.6 | 21.8 | 21.3 | 5621775 | 0.201 |
| 19 | 41.0 | 41.2 | 16.5 | 15.4 | 5092738 | 0.223 |
| 20 | 32.4 | 33.7 | 14.9 | 13.8 | 2085608 | 0.327 |
| 21 | 39.7 | 40.0 | 7.1 | 6.9 | 4587370 | 0.227 |
| 22 | 38.7 | 40.2 | 11.2 | 11.4 | 4266610 | 0.235 |
| 23 | 42.5 | 47.2 | 29.7 | 28.5 | 5892201 | 0.314 |
| 24 | 42.6 | 49.6 | 46.9 | 43.7 | 5675736 | 0.312 |

(continued)

| Steel | 40-mm hardness (HRC) | Fn1 | M 50% (mm) | Fn2 | Rolling contact fatigue life (cycle) | Wear amount (g) |
|---|---|---|---|---|---|---|
| Fn1 = 2.7 + 29.5 × C + 2.9 × Si + 6.9 × Mn + 10.8 × Cr + 30.3 × Mo + 44.3 × V | | | | | | |
| Fn2 = exp (0.76) × exp (0.05 × C) × exp (1.35 × Si) × exp (0.38 × Mn) × exp (0.77 × Cr) × exp (3.0 × Mo) × exp (4.6 × V) | | | | | | |

Next, the present inventors examined the relationship between the rolling contact fatigue resistance, wear resistance and Fn1 expressed by Formula (1) by using steels 1 to 24 given in Table 1.

That is, for each of the steels, after the 160-mm diameter round bar had been cut into a length of 100 mm, a test specimen was produced by oil quenching after heating at 900°C for 30 minutes.

For steels 1 to 24, first, from the central portion of the test specimen thus produced, a test specimen having the configuration, shown in Figure 4(a) was sampled as a "wheel test specimen" used for the rolling contact fatigue test.

For steel 1, after the 220-mm diameter round bar had been cut into a length of 100 mm, a test specimen was produced by oil quenching after heating at 900°C for 30 minutes. From the central portion of this test specimen, a test specimen having the configuration, shown in Figure 4(b) was sampled as a "rail test specimen" used for the rolling contact fatigue test.

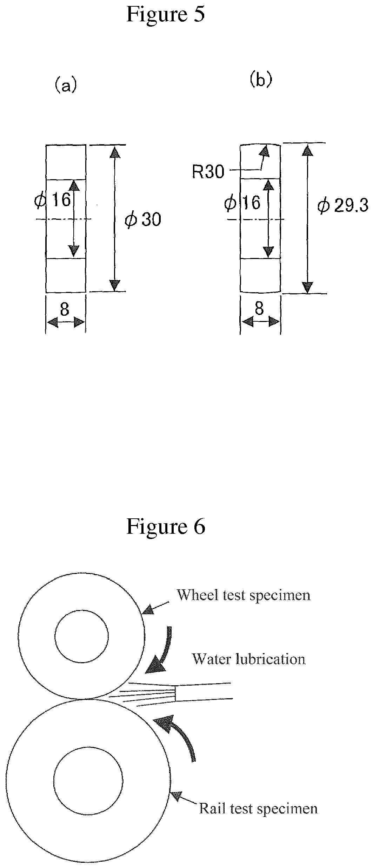

Similarly, for, steels 1 to 24, after the 70-mm diameter round bar had been cut into a length of 100 mm, a test specimen was produced by oil quenching after heating at 900°C for 30 minutes. From the central portion of this test specimen, a test specimen having the configuration, shown in Figure 5(a) was sampled as a "wheel test specimen" used for the wear test.

For steel 1, a 70-mm diameter round bar specimen having a length of 100 mm was produced by being subjected to heat treatment similar to that of the above-described wheel test specimen, and from the central portion thereof, a test specimen having the configuration, shown in Figure 5(b) was sampled as a "rail test specimen" used for the wearing test.

First, the rolling contact fatigue test was conducted by the method schematically shown in Figure 6 using the wheel test specimens shown in Figure 4(a) of steels 1 to 24 and the rail test specimen shown in Figure 4(b) of steel 1.

The conditions of the rolling contact fatigue test were Hertzian stress: 1100 MPa, slip ratio: 0.28% and rotational speed: 1000 rpm on the wheel side and 602 rpm on the rail side, and the test was conducted under water lubrication. The test was carried out while the acceleration was monitored by using a vibration accelerometer, and the number of cycles in which 0.5G was detected was evaluated as the rolling contact fatigue life. The reason why 0.5G was based upon is that as the result of evaluation of the relationship between the detected acceleration and the damaged state carried out by a preliminary test, it could be confirmed that a part of the contact surface was peeled off apparently when 0.5G was exceeded.

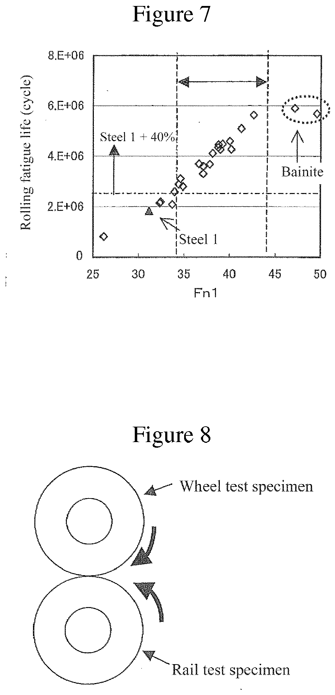

Table 2 additionally gives the rolling contact fatigue life. Also, Figure 7 shows the relationship between the rolling contact fatigue life and Fn1 expressed by Formula (1).

In Figure 7, "2.E+06" and the like mean "$2.0 \times 10^6$" and the like. In Figure 7 as well, steel 1 was indicated by a mark "▲".

It was found that, as shown in Figure 7, the rolling contact fatigue life is correlated with Fn1 expressed by Formula (1), and if Fn1 is 34 or more, the rolling contact fatigue life increases by 40% or more as compared with the rolling contact fatigue life of steel 1 corresponding to the railroad wheel steel of "Class C" of AAR.

Further, the wearing test was conducted by the method schematically shown in Figure 8 using the wheel test specimens shown in Figure 5(a) of steels 1 to 24 and the rail test specimen shown in Figure 5(b) of steel 1. For the wearing test, a Nishihara-type wear testing machine was used.

The specific test conditions were Hertzian stress: 2200 MPa, slip ratio: 0.8%, and rotational speed: 776 rpm on the wheel side and 800 rpm on the rail side. After the test had been carried out until a number of cycles of $5 \times 10^5$, the amount of wear was determined from the difference in mass of test specimen before and after the test.

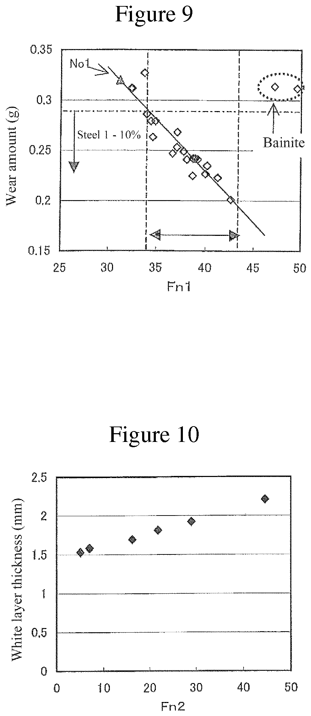

Table 2 additionally gives the amount of wear. Also, Figure 9 shows the relationship between the amount of wear and Fn1 expressed by Formula (1). In Figure 9 as well, steel 1 was indicated by a mark "▲".

It was found that, as shown in Figure 9, as far as the structure is pearlitic structure, the amount of wear decreases in proportion to Fn1 expressed by Formula (1), and if Fn1 is 34 or more, the amount of wear decreases by 10% or more as compared with the amount of wear of steel 1, and therefore the wear resistance is improved.

On the other hand, if Fn1 exceeds 43, bainitic structure is formed at least in a portion as described above. It could be confirmed that in the case where the bainitic structure is contained, even if Fn1 increases, the amount of wear does not decrease, and the wear resistance is poorer than the case of the structure composed mainly of pearlite.

In Japan Railway & Technical Review, Vol. 19 (2005) No. 9, p. 17, Kanetaka et al. reported that as the thickness of the quenched layer called a white layer increases, the crack depth increases, and therefore spalling (though being described as "shelling" in the Review, this means "spalling") becomes liable to occur.

Accordingly, the present inventors also conducted detailed studies on the influence of hardenability on spalling.

From the report of Kanetaka et al., it is presumed that with an increase in hardenability, the thickness of the white layer increases, and cracks initiate, so that the spalling life is decreased. Therefore, the present inventors examined the relationship between the hardenability and the crack initiation life in the case where the white layer was formed.

Specifically, the "wheel test specimens" each having the configuration, shown in Figure 4(a) of steels 1, 2, 5, 11, 12 and 14 described in Table 1, and the "rail test specimen" having the configuration, shown in Figure 4(b) of steel 1 were used. A thick white layer leading to spalling was formed on the test surface of the "wheel test specimen" by YAG laser, and subsequently the rolling contact fatigue test was conducted to examine the crack initiation life (spalling resistance). The conditions of YAG laser heating were output power of laser: 2500 W and feed rate: 1.2 m/min, and the test specimen was air cooled after laser heating.

The conditions of the rolling contact fatigue test were Hertzian stress: 1100 MPa, slip ratio: 0.28% and rotational speed: 100 rpm on the wheel side and 60 rpm on the rail side, and the test was conducted under water lubrication. Until the number of cycles reached 2000 cycles, the test was stopped in every 200 cycles and in the case where the number of cycles exceeds 2000 cycles, the test was stopped in every 2000 cycles to visually check the presence of crack on the surface of the test specimen.

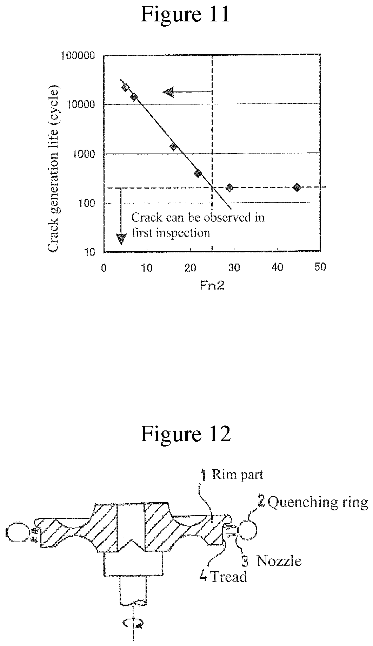

As the result, it was found that, as shown in Figures 10 and 11, with an increase in Fn2 expressed by Formula (2) that is correlated with "M50%", which is the index of hardenability, the thickness of white layer increases, and accordingly the crack initiation life decreases suddenly.

Further, it was found that when Fn2 exceeds 25, the crack initiation life decreases extremely to such a degree that cracks can be noticeable even in the first visual inspection (that is, in the visual inspection at the time when the number of cycles reaches 200 cycles).

From the above-described results, the present inventors concluded that if the chemical composition of steel is made such that Fn2 expressed by Formula (2) is 25 or less, the spalling life can be prevented from decreasing extremely.

The present invention has been completed based on the above-described findings, and the gist thereof is described in the claims.

The impurities referred to herein are elements that mixedly enter from the ore and scrap used as raw materials for steel, the environment of the manufacturing process, or the like when the steel material is manufactured industrially.

ADVANTAGE OF THE INVENTION

The wheel in accordance with the present invention is excellent in balance between the wear resistance, rolling contact fatigue resistance and the spalling resistance, and has a long life. Specifically, for the wheel in accordance with the present invention that uses the steel for wheel as a material, the amount of wear decreases by 10 to 35% and the rolling contact fatigue life increases to 1.4 to 3.2 times as compared with the wheel that uses the railroad wheel steel of "Class C" of AAR, and spalling is less liable to occur. Therefore, the steel for wheel is extremely suitable as a material for a railroad wheel used in a very harsh environment of increased running distance and increased loading capacity.

**BRIEF DESCRIPTION OF THE DRAWINGS**

Figure 1 is a schematic view for explaining an "monoblock wheel" as one example of wheel.

Figure 2 is a graph systematically showing the relationship between "40-mm hardness", which is the Rockwell C hardness at a position 40 mm distant from the water cooling end, and "Fn1", which is expressed by Formula (1), for steels 1 to 24. In this figure, "bainite" indicates that bainitic structure is formed in portions of steel.

Figure 3 is a graph systematically showing the relationship between "M50%", which is the distance in millimeter units from the water cooling end at which distance the martensitic structure fraction is 50% from the Jominy hardness, and "Fn2", which is expressed by Formula (2), for steels 1 to 24.

Figure 4 is views showing the configurations of a "wheel test specimen" and a "rail test specimen" used in the rolling contact fatigue test, Figure 4(a) showing the "wheel test specimen", and Figure 4(b) showing the "rail test specimen". In this figure, the units of dimensions are "mm".

Figure 5 is views showing the configurations of a "wheel test specimen" and a "rail test specimen" used in the wearing test, Figure 5(a) showing the "wheel test specimen", and Figure 5(b) showing the "rail test specimen". In this figure, the units of dimensions are "mm".

Figure 6 is a schematic view for explaining a method of the rolling contact fatigue test using the wheel test specimen shown in Figure 4(a) and the rail test specimen shown in Figure 4(b).

Figure 7 is a graph systematically showing the relationship between rolling contact fatigue life and "Fn1" expressed by Formula (1). In this figure, "bainite" indicates that bainitic structure is formed in portions of steel.

Figure 8 is a schematic view for explaining a method of the wearing test using the wheel test specimen shown in Figure 5(a) and the rail test specimen shown in Figure 5(b).

Figure 9 is a graph systematically showing the relationship between the amount of wear and "Fn1" expressed by Formula (1). In this figure, "bainite" indicates that bainitic structure is formed in portions of steel.

Figure 10 is a graph systematically showing the relationship between the thickness of a white layer and "Fn2" expressed by Formula (2) for steels 1, 2, 5, 11, 12 and 14.

Figure 11 is a graph systematically showing the relationship between crack initiation life and "Fn2" expressed by Formula (2) for steels 1, 2, 5, 11, 12 and 14.

Figure 12 is a view for explaining a device used in examples to subject a wheel to so-called "tread quenching".

Figure 13 is a view for explaining a measurement position of Brinell hardness of a wheel manufactured in examples.

Figure 14 is a view for explaining a position at which the microstructure of the rim part of a wheel manufactured in examples was examined.

Figure 15 is a view for explaining a position at which the microstructure of the hub part of a wheel manufactured in examples was examined.

Figure 16 is a view for explaining a position from which a wearing test specimen, a rolling contact fatigue test specimen, and a Jominy test specimen were sampled from a wheel manufactured in examples. The wearing test specimen, the rolling contact fatigue test specimen, and the Jominy test specimen were sampled on the basis of the positions indicated by "a", "b" and "c", respectively, in this figure.

## BEST MODE FOR CARRYING OUT THE INVENTION

The requirements of the present invention are explained in detail. An ideogram of "%" of the content of each element means "mass percent".

C: 0.65 to 0.84%

Carbon (C) increases the hardness, and improves the wear resistance and the rolling contact fatigue resistance. Further, C is an element capable of increasing the hardness without decreasing the spalling resistance because the increase in hardenability resulting from the increase in content is slight. If the C content is lower than 0.65%, a sufficient hardness cannot be obtained, and further the area fraction of ferrite increases, so that the wear resistance decreases. On the other hand, if the C content exceeds 0.84%, hypereutectoid cementite is formed in the hub part of the wheel, so that the toughness and the fatigue life are decreased extremely, which is unfavorable in terms of safety. Therefore, the C content was 0.65 to 0.84%. The C content is preferably 0.68% or more and also 0.82% or less.

Si: 0.02 to 0.40%

Silicon (Si) is an element that increases the hardness by decreasing the spaces between the lamellas of pearlite and by solid-solution strengthening the ferrite in pearlitic structure. If the Si content is lower than 0.02%, the above-described effect is insufficient. On the other hand, if the Si content exceeds 1.00%, the toughness decreases, and further, the hardenability increases and the spalling resistance also decreases. Therefore, the Si content was 0.02 to 0.40%. The hardness increasing effect of Si is not very large, therefore a lot of Si must be added in order to obtain high hardness steel. Consequently, the hardenability is easy to increase. Accordingly, the Si content is 0.40% or less.

Mn: 0.50 to 1.90%

Manganese (Mn) is an element that increases the hardness by decreasing the spaces between the lamellas of pearlite and by solid-solution strengthening the ferrite in pearlitic structure. Further, Mn has action for restraining the grain boundary embrittlement by capturing S in the steel to form MnS. If the Mn content is lower than 0.50%, the above-described effects, especially the S capturing effect, are insufficient. On the other hand, if the Mn content exceeds 1.90%, bainitic structure is formed and thereby the wear resistance is reduced, and further, the hardenability increases and thereby the spalling resistance is also reduced. Therefore, the Mn content was 0.50 to 1.90%. The Mn content is preferably 1.40% or less.

Cr: 0.02 to 0.50%

Chromium (Cr) achieves an effect of remarkably increasing the hardness of pearlite by decreasing the spaces between the lamellas of pearlite. If the Cr content is lower than 0.02%, the effect is insufficient. On the other hand, if the Cr content exceeds 0.50%, carbides are less liable to form a solid solution in austenite at the time of heating, and undissolved carbides are formed depending on the heating conditions, so that the hardness, toughness, fatigue strength, and the like may be decreased. Further, the hardenability increases and the spalling resistance decreases. Therefore, the Cr content was 0.02 to 0.50%. The Cr content is preferably 0.05% or more and also 0.45% or less.

V: 0.02 to 0.20%

Vanadium (V) achieves an effect of remarkably increasing the hardness of pearlite by precipitating in the ferrite in pearlite as V carbides. If the V content is lower than 0.02%, the effect is insufficient. On the other hand, even if V has a content exceeding 0.20%, by the ordinary heat treatment, the hardness is saturated and the cost is increased, and additionally, the hardenability is increased and the spalling resistance is decreased. Therefore, the V content was 0.02 to 0.20%. The V content is preferably 0.03% or more and also 0.15% or less.

S: 0.04% or less

Sulfur (S) is an impurity contained in the steel. Also, in the case where S is contained positively, although the influence on the hardness and the hardenability is small, an effect of improving the machinability is achieved. If the S content exceeds 0.04%, the toughness decreases. Therefore, the S content was 0.04% or less. The S content is preferably 0.03% or less. In order to achieve the effect of improving the machinability, the S content is preferably 0.005% or more.

Fnl: 35 to 43

For the steel for wheel in accordance with the present invention, Fn1 expressed by Formula (1) must be 35 to 43.

$$Fn1 = 2.7 + 29.5 \times C + 2.9 \times Si + 6.9 \times Mn + 10.8 \times Cr + 30.3 \times Mo + 44.3 \times V \dots (1)$$

in which C, Si, Mn, Cr, Mo and V each mean the content in percent by mass of the element.

If Fn1 is less than 34, the wear resistance and the rolling contact fatigue resistance are scarcely improved as compared with the railroad wheel steel of "Class C" of AAR and in some cases, the resistances become lower than those of the railroad wheel steel of "Class C". Therefore, it is difficult to use this steel as the material for the railroad wheel used in a very harsh environment of increased running distance and increased loading capacity.

On the other hand, if Fn1 exceeds 43, the structure composed mainly of pearlite becomes less liable to be obtained, and the wear resistance decreases. Further, since the hardness increases too much, the toughness decreases.

When Fn1 is 34 or more, the rolling contact fatigue resistance is improved by 40 % or more as compared with the railroad wheel steel of "Class C" of AAR. The resistance is improved by 50 % or more when Fn1 is 35 or more, and is improved by 70 % or more when Fn1 is 36 or more. Fn1 is 35 to 43.

Fn2: 25 or less

For the steel for wheel in accordance with the present invention, Fn2 expressed by Formula (2) must be 25 or less.

$$Fn2 = \exp{(0.76)} \times \exp{(0.05 \times C)} \times \exp{(1.35 \times Si)} \times \exp{(0.38 \times Mn)} \times \exp{(0.77 \times Cr)} \times \exp{(3.0 \times Mo)} \times \exp{(4.6 \times V)} \dots (2)$$

in which C, Si, Mn, Cr, Mo and V each mean the content in percent by mass of the element.

If Fn2 exceeds 25, the hardenability increases, and the spalling resistance decreases. Fn2 is preferably 20 or less, and further preferably 15 or less.

If Fn2 is less than 3, it is difficult to make Fn1 expressed by Formula (1) 34 or more. Therefore, Fn2 is preferably 3 or more.

One of the steels for wheel in accordance with the present invention has a chemical composition consisting of the above-described elements and the balance consisting of Fe and impurities.

In the present invention, the impurities contain P: 0.05% or less, Cu: 0.20% or less, and Ni: 0.20% or less.

Hereunder, these elements are explained.

P: 0.05% or less

Phosphorus (P) is an impurity contained in the steel. If the P content exceeds 0.05%, the toughness decreases. Therefore, the content of P in the impurities was 0.05% or less. The P content is preferably 0.025% or less.

Cu: 0.20% or less

Copper (Cu) is an impurity contained in the steel. If the Cu content exceeds 0.20%, the number of surface defects formed at the manufacturing time increases, and furthers, the hardenability increases and the spalling resistance decreases. Therefore, the content of Cu in the impurities was 0.20% or less. The Cu content is preferably 0.10% or less.

Ni: 0.20% or less

Nickel (Ni) is an impurity contained in the steel. If the Ni content exceeds 0.20%, the hardenability increases and the spalling resistance decreases. Therefore, the content of Ni in the impurities was 0.20% or less. The Ni content is preferably 0.10% or less.
As another chemical composition of the steel for wheel in accordance with the present invention, the following content of Mo may be contained as necessary in lieu of a part of Fe.

Mo: 0.20% or less

Molybdenum (Mo) may be contained because it has action for increasing the hardness of pearlite. However, if the Mo content exceeds 0.20%, bainitic structure is formed and the wear resistance decreases, and further, the hardenability increases and the spalling resistance decreases. Therefore, the content of Mo in the case of being contained was 0.20% or less. The content of Mo in the case of being contained is preferably 0.07% or less.
On the other hand, in order to stably achieve the above-described effects of Mo, the Mo content is preferably 0.02% or more.
As still another chemical composition of the steel for wheel in accordance with the present invention, the following content of Al may be contained as necessary in lieu of a part of Fe.

Al: 0.20% or less

Aluminum (Al) may be contained because it achieves an effect of refining the grain size and thereby improving the toughness. However, if the Al content exceeds 0.20%, the amount of coarse inclusions increases, whereby the toughness and the fatigue strength are decreased. Therefore, the content of Al in the case of being contained was 0.20% or less. The content of Al in the case of being contained is preferably 0.15% or less.
On the other hand, in order to stably achieve the effect of refining the grain size of Al, the Al content is preferably 0.002% or more.
For the micro-structure of the wheel using the steel for wheel in accordance with the present invention as a material, the area fraction of pearlitic structure of the rim part thereof is 95% or more, and a 100% pearlitic structure is most desirable. The reason for this is that a structure other than pearlite, such as ferritic structure and bainitic structure, has a low wear resistance, and it is desirable that the total area fraction of structures other than pearlite be 5% or less. Further, a structure in which hypereutectoid cementite does not precipitate is desirable. The reason for this is that the precipitation of hypereutectoid cementite decreases the rolling contact fatigue resistance.
It is desirable that the hub part of the wheel have the same structure as that of the rim part, although no special problem arises even if the area fraction of structures other than pearlite exceeds 5%. However, a structure in which hypereutectoid cementite does not precipitate is desirable. The reason for this is that in some cases, the precipitation of hypereutectoid cementite leads to an extreme decrease in toughness and fatigue life. At least, the formation of hypereutectoid cementite observed under an optical microscope must be avoided.
The wheel using the steel for wheel in accordance with the present invention as a material can be manufactured by successively performing the treatment described, for example, in the following items (1) to (3). After the treatment of item (3), tempering treatment is performed.

(1) Melting and casting of steel

After being melted in an electric furnace, a converter, or the like, the material is cast into an ingot. The ingot may be a cast piece obtained by continuous casting, or may be an ingot cast in a mold.

(2) Forming into wheel

To obtain a predetermined wheel configuration, the ingot is formed into a wheel directly, or by an appropriate method, such as hot forging or machining, after once having been fabricated into a slab. The ingot may be formed into a wheel configuration, directly by casting, but it is desirable that the ingot be hot forged.

(3) Tread Quenching

A quenching method in which a compressive residual stress occurs in the rim part, such as the "tread quenching process", is employed. The heating temperature in quenching is between $Ac_3$ point to ($Ac_3$ point + 250°C). If the heating temperature is lower than $Ac_3$ point, the structure is not transformed into austenite, and in some cases, pearlite having a high hardness cannot be obtained by cooling after heating. On the other hand, if the heating temperature exceeds ($Ac_3$ point + 250°C), the grain size are coarsened, whereby the toughness is sometimes decreased, which is unfavorable in terms of wheel performance.

The cooling after heating is preferably performed by an appropriate method such as water cooling, oil cooling, mist cooling, or air cooling, given the wheel size, the facility, and the like so that the above-described structure can be obtained in the wheel.

Hereunder, the present invention is explained more specifically by using examples. However, the present invention is not limited to these examples.

**Embodiment**

After steels 25 to 46 having chemical components given in Table 3 had been melted in an electric furnace, the molten steels each were poured into a mold having a diameter of 513 mm to produce ingots.

Steels 29, 31, 34 and 40 are steels of example embodiments of the present invention in which the chemical composition is within the range defined in the present invention. On the other hand, steels 25 to 27, 30, 32, and 35 to 37 are steels of comparative examples in which the chemical composition deviates from the conditions defined in the present invention. Steels 28, 33, 38, 39 and 41 to 46 are reference examples.

Among the steels of comparative examples, steel 25 is steel corresponding to the railroad wheel steel of "Class C" of AAR.

Table 3

| Steel | Chemical composition (mass%) Balance: Fe and impurities | | | | | | | | | | | | |
|---|---|---|---|---|---|---|---|---|---|---|---|---|---|
| | C | Si | Mn | P | S | Cu | Ni | Cr | Mo | V | Al | Fn1 | Fn2 |
| 25 | 0.69 | 0.29 | 0.78 | 0.012 | 0.008 | 0.01 | 0.02 | 0.09 | - | *- | 0.024 | *30.25 | 4.7 |
| 26 | *0.58 | 0.31 | 0.82 | 0.014 | 0.009 | 0.02 | 0.03 | 0.07 | - | 0.16 | 0.024 | 34.21 | 10.1 |
| 27 | *0.87 | 0.29 | 0.81 | 0.011 | 0.008 | 0.02 | 0.02 | 0.07 | - | * - | 0.015 | 35.55 | 4.7 |
| 28 | 0.72 | 0.98 | 0.83 | 0.016 | 0.009 | 0.03 | 0.02 | 0.18 | - | 0.06 | 0.023 | 37.11 | 17.3 |
| 29 | 0.73 | 0.25 | 1.39 | 0.014 | 0.009 | 0.03 | 0.03 | 0.11 | - | 0.08 | 0.019 | 39.28 | 8.3 |
| 30 | 0.71 | 0.97 | 0.88 | 0.017 | 0.010 | 0.02 | 0.03 | 0.43 | 0.02 | 0.09 | 0.027 | 41.77 | * 25.6 |
| 31 | 0.73 | 0.28 | 0.82 | 0.013 | 0.012 | 0.03 | 0.02 | 0.17 | 0.07 | 0.09 | 0.018 | 38.65 | 9.4 |
| 32 | 0.71 | 0.32 | 0.83 | 0.014 | 0.009 | 0.02 | 0.02 | 0.07 | *0.30 | * - | 0.014 | 40.15 | 12.1 |
| 33 | 0.75 | 0.31 | 0.83 | 0.013 | 0.011 | 0.02 | 0.02 | 0.14 | - | 0.04 | 0.015 | 34.74 | 6.2 |
| 34 | 0.71 | 0.29 | 0.81 | 0.014 | 0.008 | 0.02 | 0.03 | 0.09 | - | 0.11 | 0.016 | 35.92 | 7.9 |
| 35 | 0.66 | 0.29 | 0.68 | 0.013 | 0.012 | 0.03 | 0.02 | 0.05 | - | 0.03 | 0.023 | *29.57 | 5.1 |
| 36 | 0.79 | 0.31 | 0.80 | 0.011 | 0.009 | 0.02 | 0.03 | 0.20 | 0.10 | 0.18 | 0.015 | *45.59 | 16.5 |
| 37 | 0.71 | *1.02 | 0.82 | 0.015 | 0.007 | 0.03 | 0.02 | 0.07 | 0.10 | 0.10 | 0.017 | 40.48 | * 27.1 |
| 38 | 0.74 | 0.80 | 0.83 | 0.014 | 0.008 | 0.03 | 0.02 | 0.44 | 0.02 | 0.11 | 0.037 | 42.81 | 22.1 |
| 39 | 0.75 | 0.48 | 0.82 | 0.014 | 0.009 | 0.02 | 0.03 | 0.42 | - | 0.07 | 0.031 | 39.51 | 11.1 |
| 40 | 0.76 | 0.21 | 0.81 | 0.015 | 0.008 | 0.03 | 0.02 | 0.39 | - | 0.10 | 0.034 | 39.96 | 8.6 |
| 41 | 0.76 | 0.81 | 0.79 | 0.013 | 0.032 | 0.03 | 0.02 | 0.18 | - | 0.11 | 0.042 | 39.74 | 17.1 |
| 42 | 0.72 | 0.48 | 0.83 | 0.012 | 0.037 | 0.03 | 0.03 | 0.31 | - | 0.08 | 0.024 | 37.95 | 10.7 |
| 43 | 0.73 | 0.48 | 0.80 | 0.014 | 0.012 | 0.09 | 0.02 | 0.28 | - | 0.09 | - | 38.16 | 10.8 |
| 44 | 0.71 | 0.47 | 0.83 | 0.015 | 0.010 | 0.02 | 0.08 | 0.26 | - | 0.09 | - | 37.53 | 10.6 |

(continued)

| Steel | Chemical composition (mass%) Balance: Fe and impurities | | | | | | | | | | | | |
| --- | --- | --- | --- | --- | --- | --- | --- | --- | --- | --- | --- | --- | --- |
| | C | Si | Mn | P | S | Cu | Ni | Cr | Mo | V | Al | Fn1 | Fn2 |
| 45 | 0.73 | 0.47 | 0.80 | 0.017 | 0.008 | 0.02 | 0.02 | 0.30 | - | 0.09 | 0.092 | 38.35 | 10.8 |
| 46 | 0.72 | 0.47 | 0.81 | 0.014 | 0.011 | 0.03 | 0.02 | 0.10 | 0.05 | 0.05 | - | 35.70 | 9.0 |

Fn1 = 2.7 + 29.5 × C + 2.9 × Si + 6.9 × Mn + 10.8 × Cr + 30.3 × Mo + 44.3 × V

Fn2 = exp (0.76) × exp (0.05 x C) × exp (1.35 × Si) × exp (0.38 × Mn) × exp (0.77 × Cr) × exp (3.0 × Mo) × exp (4.6 × V)

* mark indicates that chemical composition deviates from conditions defined in the present invention.

The ingot of each steel was cut into a length of 300 mm, and after having been heated to 1200°C, the cut ingot was hot forged by the ordinary method, whereby a wheel having a diameter of 965 mm was manufactured. This wheel has the configuration, of "AAR TYPE:B-38" described in M-107/M-207 standards of AAR.

Next, after having been heated at 900°C for 2 hours, each of the wheels was heat treated by a method in which, using a device shown in Figure 12, the wheel is cooled by spraying water from nozzles while the wheel is rotated (so-called "tread quenching process")

After the above-described heat treatment, tempering treatment (treatment in which the wheel is held at 500°C for 2 hours and thereafter is cooled in the atmosphere) was performed.

On the wheel thus manufactured, the hardness test of the rim part, the microstructure examination of the rim part and hub part, the wearing test, the rolling contact fatigue test, and the Jominy test were conducted. In each test, the test results in test sign A using steel 25 were based upon.

[1] Hardness test of rim part

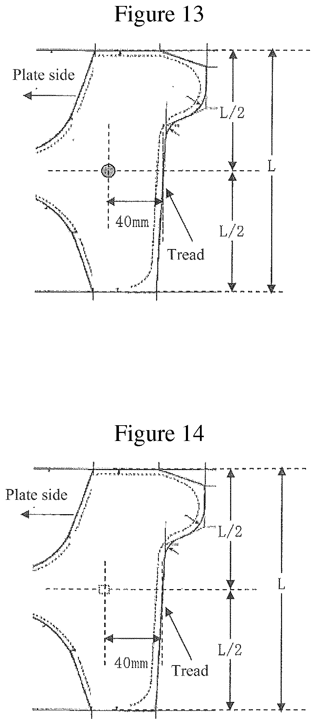

For each steel, as shown in Figure 13, Brinell hardness (hereinafter, referred to as "HBW") at a position 40 mm distant from the tread in the tread central portion of the rim part was measured.

[2] Microstructure examination of rim part

For each steel, as shown in Figure 14, microstructure at a position 40 mm distant from the tread in the tread central portion of the rim part was examined. The position was corroded with nital and the microstructure was observed under an optical microscope at ×400 magnification.

In the case where the microstructure contained ferritic or bainitic structure, the area fraction thereof was measured. If the area fraction was 5% or more, the microstructure was recognized as a microstructure containing ferrite or bainite. In the case where ferrite or bainite was contained, "P + F" or "P + B" was written in Table 4 described later.

[3] Microstructure examination of hub part

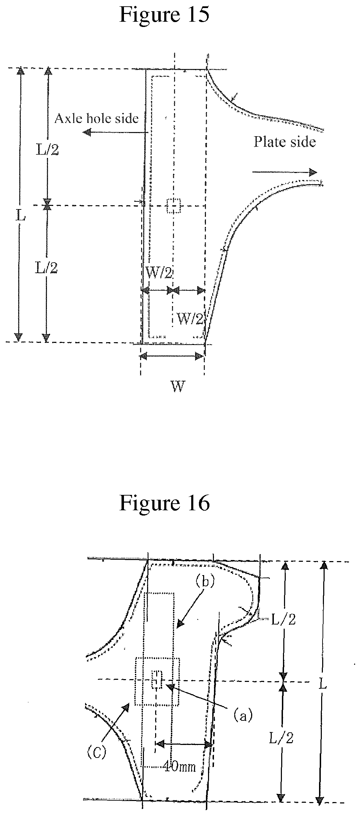

For each steel, as shown in Figure 15, microstructure at a position in the center of the hub part was examined. The position was corroded with nital and the microstructure was observed in the same way as in the rim part.

[4] Wearing test

For each steel, as shown in Figure 16, on the basis of the position 40 mm distant from the tread in the tread central portion of the rim part (the position indicated by "a" in Figure 16), a "wheel test specimen" (a test specimen having the configuration, shown in Figure 5(a)) used for the wearing test was sampled.

By using the "wheel test specimen" of each of steels 25 to 46 and the before-mentioned "rail test specimen" of steel 1, the wearing test using the Nishihara-type wear testing machine was conducted under the same conditions as those for steels 1 to 24 to determine the amount of wear.

Specifically, the wearing test was conducted under the conditions of Hertzian stress: 2200 MPa, slip ratio: 0.8%, and rotational speed: 776 rpm on the wheel side and 800 rpm on the rail side, and after the test had been carried out until a number of cycles of $5 \times 10^5$, the amount of wear was determined from the difference in mass of test specimen before and after the test.

[5] Rolling contact fatigue test

For each steel, as shown in Figure 16, on the basis of the position 40 mm distant from the tread in the tread central portion of the rim part (the position indicated by "b" in Figure 16), a "wheel test specimen" (a test specimen having the configuration, shown in Figure 4(a)) used for the rolling contact fatigue test was sampled.

By using this "wheel test specimen", the rolling contact fatigue test was conducted under the same conditions as those for steels 1 to 24 to determine the rolling contact fatigue life.

Specifically, by using the "wheel test specimen" of each of steels 25 to 46 and the before-mentioned "rail test specimen" of steel 1, the rolling contact fatigue test was conducted under the conditions of Hertzian stress: 1100 MPa, slip ratio: 0.28%, rotational speed: 1000 rpm on the wheel side and 602 rpm on the rail side, and under water lubrication, and the number of cycles in which 0.5G was detected by an accelerometer was evaluated as the rolling contact fatigue life.

[6] Jominy test

For each steel, as shown in Figure 16, on the basis of the position 40 mm distant from the tread in the tread central portion of the rim part (the position indicated by "c" in Figure 16), a Jominy test specimen was sampled, and the Jominy test was conducted under the same conditions as those for steels 1 to 24 to determine the "M50%".

Specifically, the test specimen was austenitized at 900°C for 30 minutes in the atmosphere, and thereafter was subjected to end quenching. Then, the hardness distribution to a position 50 mm distant from the water cooling end was measured after 1.0-mm parallel cutting, and thereby the "M50%" was determined by the same method as described above.

Table 4 systematically gives the test results.

Table 4

| Test sign | Steel | Hardness of rim part (HBW) | Structure of rim part | | Structure of hub part | | Wear amount (g) | rolling contact fatigue life (cycle) | M 50% (mm) | Remarks |
|---|---|---|---|---|---|---|---|---|---|---|
| | | | Phase | (Hyper-eutectic $\theta$) | Phase | (hypereutectoid cementite) | | | | |
| A | *25 | 318 | P | Absent | P | Absent | 0.318 | 1865869 | 5.2 | Basis |
| B | *26 | 351 | P+F | Absent | P+F | Absent | 0.343 | 2773396 | 11.4 | Comparative example |
| C | *27 | 360 | P | Absent | P | Present | 0.274 | 3205980 | 5.3 | Comparative example |
| D | 28 | 363 | P | Absent | P | Absent | 0.263 | 3363547 | 17.2 | Example embodiment of the present invention |
| E | 29 | 392 | P | Absent | P | Absent | 0.212 | 4623395 | 7.8 | Example embodiment of the present invention |
| F | *30 | 405 | P | Absent | P | Absent | 0.219 | 5118336 | 25.9 | Comparative example |
| G | 31 | 376 | P | Absent | P | Absent | 0.239 | 4182543 | 8.4 | Example embodiment of the present invention |
| H | *32 | 391 | P+B | Absent | P+B | Absent | 0.311 | 4706338 | 11.7 | Comparative example |
| I | 33 | 348 | P | Absent | P | Absent | 0.265 | 3129876 | 6.9 | Example embodiment of the present invention |
| J | 34 | 373 | P | Absent | P | Absent | 0.256 | 3848436 | 9.0 | Example embodiment of the present invention |
| K | *35 | 308 | P | Absent | P | Absent | 0.331 | 1722439 | 5.5 | Comparative example |
| L | *36 | 415 | P+B | Absent | P+B | Absent | 0.327 | 5777157 | 18.3 | Comparative example |
| M | *37 | 402 | P | Absent | P | Absent | 0.208 | 5280593 | 27.8 | Comparative example |
| N | 38 | 401 | P | Absent | P | Absent | 0.202 | 5466597 | 23.6 | Example embodiment of the present invention |
| O | 39 | 385 | P | Absent | P | Absent | 0.221 | 4212039 | 11.3 | Example embodiment of the present invention |
| P | 40 | 389 | P | Absent | P | Absent | 0.214 | 4975350 | 9.5 | Example embodiment of the present invention |
| Q | 41 | 385 | P | Absent | P | Absent | 0.215 | 4458924 | 17.2 | Example embodiment of the present invention |
| R | 42 | 382 | P | Absent | P | Absent | 0.238 | 3975456 | 11.4 | Example embodiment of the present invention |
| S | 43 | 375 | P | Absent | P | Absent | 0.239 | 4373751 | 11.9 | Example embodiment of the present invention |
| T | 44 | 371 | P | Absent | P | Absent | 0.245 | 3864426 | 11.5 | Example embodiment of the present invention |

| Test sign | Steel | Hardness of rim part (HBW) | Structure of rim part | | Structure of hub part | | Wear amount (g) | rolling contact fatigue life (cycle) | M 50% (mm) | Remarks |
|---|---|---|---|---|---|---|---|---|---|---|
| | | | Phase | (Hyper-eutectic $\theta$) | Phase | (hypereutectoid cementite) | | | | |
| U | 45 | 378 | P | Absent | P | Absent | 0.247 | 3808409 | 10.2 | Example embodiment of the present invention |
| V | 46 | 359 | P | Absent | P | Absent | 0.271 | 3123496 | 10.6 | Example embodiment of the present invention |

"P", "F", "B" and "$\theta$" in structure columns of rim part and hub part mean pearlite, ferrite, bainite, and cementite, respectively. * mark indicates that chemical composition deviates from conditions defined in the present invention.

As is apparent from Table 4, for test signs E, G, J and P of example embodiments of the present invention in which steel whose chemical composition satisfies the conditions defined in the present invention is used, the wear resistance and the rolling contact fatigue resistance were excellent as compared with test sign A, which is the basis using steel 25 corresponding to the railroad wheel steel of "Class C" of AAR.

All of the values of Fn2 of steels used for test signs of example embodiments of the present invention were smaller than 25. Therefore, it is presumed that the hardenability is low and the spalling resistance is excellent.

In contrast, for test sign B of comparative example in which steel 26 whose C content is as low as 0.58%, deviating from the conditions defined in the present invention, is used, 5% or more of ferrite was formed in the structure, and the amount of wear was large.

For test sign C of comparative example in which steel 27 whose C content is as high as 0.87% and which does not contain V, deviating from the conditions defined in the present invention, is used, hypereutectoid cementite was observed in the hub part.

For test sign F of comparative example in which steel 30 whose Fn2 is as high as 25.6, deviating from the conditions defined in the present invention, is used, the hardenability was high. Therefore, it is presumed that the spalling resistance is poor.

For test sign H of comparative example in which steel 32 whose Mo content is as high as 0.30% and which does not contain V, deviating from the conditions defined in the present invention, is used, 5% or more of bainite was formed in the structure, so that the amount of wear was large.

For test sign K of comparative example in which steel 35 whose Fn1 is as low as 29.57, deviating from the conditions defined in the present invention, is used, the hardness of the rim part was as low as 308 in HBW, so that the amount of wear was large. Further, the rolling contact fatigue life was also short.

For test sign L of comparative example in which steel 36 whose Fn1 is as high as 45.59, deviating from the conditions defined in the present invention, is used, 5% or more of bainite was formed in the structure, so that the amount of wear was large.

For test sign M of comparative example in which steel 37 whose Si content and Fn2 are as high as 1.02% and 27.1, respectively, deviating from the conditions defined in the present invention, is used, the hardenability was high. Therefore, it is presumed that the spalling resistance is poor.

## INDUSTRIAL APPLICABILITY

The wheel in accordance with the present invention is excellent in balance between the wear resistance, rolling contact fatigue resistance and the spalling resistance, and has a long life. Specifically, for the wheel in accordance with the invention that uses the steel for wheel as a material, the amount of wear decreases by 10 to 35% and the rolling contact fatigue life increases to 1.4 to 3.2 times as compared with the wheel that uses the railroad wheel steel of "Class C" of AAR, and spalling is less liable to occur. Therefore, the wheel in accordance with the present invention is extremely suitable for a railroad wheel used in a very harsh environment of increased running distance and increased loading capacity.

## Claims

1. A wheel having a chemical composition consisting of, by mass percent, C: 0.65 to 0.84%, Si: 0.02 to 0.40%, Mn: 0.50 to 1.90%, Cr: 0.02 to 0.50%, V: 0.02 to 0.20%, and S: 0.04% or less, optionally at least one selected from 0.20% or less of Mo, 0.20% or less of Al, Cu: 0.20% or less, and Ni: 0.20% or less, in which Fn1 expressed by Formula (1) is 35 to 43, and Fn2 expressed by Formula (2) is 25 or less, the balance being Fe and impurities, and the impurities containing P: 0.05% or less;

$$Fn1 = 2.7 + 29.5 \times C + 2.9 \times Si + 6.9 \times Mn + 10.8 \times Cr + 30.3 \times Mo + 44.3 \times V \dots (1)$$

$$Fn2 = \exp(0.76) \times \exp(0.05 \times C) \times \exp(1.35 \times Si) \times \exp(0.38 \times Mn) \times \exp(0.77 \times Cr) \times \exp(3.0 \times Mo) \times \exp(4.6 \times V) \dots (2)$$

in Formulas (1) and (2), C, Si, Mn, Cr, Mo and V each mean the content in percent by mass of the element, wherein the area fraction of pearlitic structure of a rim part of the wheel is 95% or more.

**2.** The wheel according to claim 1, being a railroad wheel.

**3.** The wheel according to any one of the preceding claims, wherein the content is at least one of (a) to (e):

(a) the C content is 0.68% or more and 0.82% or less;
(b) the Mn content is 1.40% or less;
(c) the Cr content is 0.05% or more and 0.45% or less;
(d) the V content is 0.02% or more and 0.15% or less;
(e) the S content is 0.03% or less and/or 0.005% or more.

**4.** The wheel according to any one of the preceding claims, wherein Fn1 is 36 or more.

**5.** The wheel according to any one of the preceding claims, wherein Fn2 is 3 or more and/or 15 or less.

**6.** The wheel according to any one of the preceding claims, wherein the Mo content is 0.07% or less and/or 0.02% or more.

**7.** The wheel according to any one of the preceding claims, wherein the Al content is 0.15% or less and/or 0.002% or more.

**8.** Method of manufacturing a wheel according to claim 1 by successively performing the steps of:

(1) Melting a steel having a chemical composition consisting of, by mass percent, C: 0.65 to 0.84%, Si: 0.02 to 0.40%, Mn: 0.50 to 1.90%, Cr: 0.02 to 0.50%, V: 0.02 to 0.20%, and S: 0.04% or less, optionally at least one selected from 0.20% or less of Mo, 0.20% or less of Al, Cu: 0.20% or less, and Ni: 0.20% or less, in which Fn1 expressed by Formula (1) as defined in claim 1 is 35 to 43, and Fn2 expressed by Formula (2) as defined in claim 1 is 25 or less, the balance being Fe and impurities, and the impurities containing P: 0.05% or less; and casting the steel into an ingot;
(2) Forming the ingot into a wheel by hot forging;
(3) Tread quenching the wheel by heating the wheel to a temperature between the Ac3 point and the Ac3 point + 250°C, and cooling;
(4) Tempering the wheel.

**9.** The method according to claim 8, wherein the wheel is a railroad wheel.

**10.** The method according to claim 8 or 9, wherein the content is at least one of (a) to (e):

(a) the C content is 0.68% or more and 0.82% or less;
(b) the Mn content is 1.40% or less;
(c) the Cr content is 0.05% or more and 0.45% or less;
(d) the V content is 0.02% or more and 0.15% or less;
(e) the S content is 0.03% or less and/or 0.005% or more.

**11.** The method according to any one of claims 8 to 10, wherein Fn1 is 36 or more.

**12.** The method according to any one of claims 8 to 11, wherein Fn2 is 3 or more and/or 15 or less.

**13.** The method according to any one of claims 8 to 12, wherein the Mo content is 0.07% or less and/or 0.02% or more.

**14.** The method according to any one of claims 8 to 13, wherein the Al content is 0.15% or less and/or 0.002% or more.

**Patentansprüche**

**1.** Rad mit einer chemischen Zusammensetzung, bestehend aus, in Massenprozent, C: 0,65 bis 0,84 %, Si: 0,02 bis 0,40 %, Mn: 0,50 bis 1,90 %, Cr: 0,02 bis 0,50 %, V: 0,02 bis 0,20 % und S: 0,04 % oder weniger, wahlweise mindestens einem ausgewählt aus 0,20 % oder weniger an Mo, 0,20 % oder weniger an Al, Cu: 0,20 % oder weniger und Ni: 0,20 % oder weniger, in der Fn1, ausgedrückt durch Formel (1), 35 bis 43 beträgt, und Fn2, ausgedrückt durch Formel (2), 25 oder weniger beträgt, wobei der Rest Fe und Verunreinigungen sind, und die Verunreinigungen P: 0,05 % oder weniger enthalten;

$$Fn1 = 2{,}7 + 29{,}5 \times C + 2{,}9 \times Si + 6{,}9 \times Mn + 10{,}8 \times Cr + 30{,}3 \times Mo + 44{,}3 \times V \ldots (1)$$

$$Fn2 = \exp(0{,}76) \times \exp(0{,}05 \times C) \times \exp(1{,}35 \times Si) \times \exp(0{,}38 \times Mn) \times \exp(0{,}77 \times Cr) \times \exp(3{,}0 \times Mo) \times \exp(4{,}6 \times V) \ldots (2)$$

in Formeln (1) und (2) C, Si, Mn, Cr, Mo und V jeweils den Gehalt in Massenprozent des Elements bedeuten, wobei der Flächenanteil von perlitischer Struktur eines Felgenteils des Rades 95 % oder mehr beträgt.

2.  Rad nach Anspruch 1, bei dem es sich um ein Eisenbahnrad handelt.

3.  Rad nach einem der vorhergehenden Ansprüche,
    wobei der Gehalt mindestens eines von (a) bis (e) beträgt:

    (a) der C-Gehalt beträgt 0,68 % oder mehr und 0,82 % oder weniger;
    (b) der Mn-Gehalt beträgt 1,40 % oder weniger;
    (c) der Cr-Gehalt beträgt 0,05 % oder mehr und 0,45 % oder weniger;
    (d) der V-Gehalt beträgt 0,02 % oder mehr und 0,15 % oder weniger;
    (e) der S-Gehalt beträgt 0,03 % oder weniger und/oder 0,005 % oder mehr.

4.  Rad nach einem der vorstehenden Ansprüche, wobei Fn1 36 oder mehr beträgt.

5.  Rad nach einem der vorstehenden Ansprüche, wobei Fn2 3 oder mehr und/oder 15 oder weniger beträgt.

6.  Rad nach einem der vorstehenden Ansprüche, wobei der Mo-Gehalt 0,07 % oder weniger und/oder 0,02 % oder mehr beträgt.

7.  Rad nach einem der vorstehenden Ansprüche, wobei der Al-Gehalt 0,15 % oder weniger und/oder 0,002 % oder mehr beträgt.

8.  Verfahren zum Herstellen eines Rades nach Anspruch 1, indem sukzessive die folgenden Schritte durchgeführt werden:

    (1) Schmelzen eines Stahls mit einer chemischen Zusammensetzung, bestehend aus, in Massenprozent, C: 0,65 bis 0,84 %, Si: 0,02 bis 0,40 %, Mn: 0,50 bis 1,90 %, Cr: 0,02 bis 0,50 %, V: 0,02 bis 0,20 %, und S: 0,04 % oder weniger, wahlweise mindestens einem ausgewählt aus 0,20 % oder weniger an Mo, 0,20 % oder weniger an Al, CU: 0,20 % oder weniger, und Ni: 0,20 % oder weniger, in der Fn1, ausgedrückt durch Formel (1) wie in Anspruch 1 definiert, 35 bis 43 beträgt, und Fn2, ausgedrückt durch Formel (2) wie in Anspruch 1 definiert, 25 oder weniger beträgt, wobei der Rest Fe und Verunreinigungen sind, und die Verunreinigungen P: 0,05 % oder weniger enthalten; und Gießen des Stahls in einen Barren;
    (2) Formen des Barrens in ein Rad durch Warmschmieden;
    (3) Laufflächenabschrecken des Rades durch Erwärmen des Rades auf eine Temperatur zwischen dem Ac3-Punkt und dem Ac3-Punkt + 250 °C und Kühlen;
    (4) Temperieren des Rades.

9.  Verfahren nach Anspruch 8, wobei das Rad ein Eisenbahnrad ist.

10. Verfahren nach Anspruch 8 oder 9, wobei der Gehalt mindestens eines von (a) bis (e) beträgt:

    (a) der C-Gehalt beträgt 0,68 % oder mehr und 0,82 % oder weniger;

(b) der Mn-Gehalt beträgt 1,40 % oder weniger;
(c) der Cr-Gehalt beträgt 0,05 % oder mehr und 0,45 % oder weniger;
(d) der V-Gehalt beträgt 0,02 % oder mehr und 0,15 % oder weniger;
(e) der S-Gehalt beträgt 0,03 % oder weniger und/oder 0,005 % oder mehr.

**11.** Verfahren nach einem der Ansprüche 8 bis 10, wobei Fn1 36 oder mehr beträgt.

**12.** Verfahren nach einem der Ansprüche 8 bis 11, wobei Fn2 3 oder mehr und/oder 15 oder weniger beträgt.

**13.** Verfahren nach einem der Ansprüche 8 bis 12, wobei der Mo-Gehalt 0,07 % oder weniger und/oder 0,02 % oder mehr beträgt.

**14.** Verfahren nach einem der Ansprüche 8 bis 13, wobei der Al-Gehalt 0,15 % oder weniger und/oder 0,002 % oder mehr beträgt.

## Revendications

**1.** Roue présentant une composition chimique consistant en, en pourcent en masse, C : 0,65 à 0,84 %, Si : 0,02 à 0,40 %, Mn : 0,50 à 1,90 %, Cr : 0,02 à 0,50 %, V : 0,02 à 0,20 %, et S : 0,04 % ou inférieur, éventuellement au moins un choisi parmi 0,20 % ou inférieur de Mo, 0,20 % ou inférieur de Al, Cu : 0,20 % ou inférieur, et Ni : 0,20 % ou inférieur, dans laquelle Fn1 exprimé par la formule (1) est de 35 à 43, et Fn2 exprimé par la formule (2) est de 25 ou inférieur, le reste étant Fe et des impuretés, et les impuretés contenant P : 0,05 % ou inférieur ;

$$Fn1 = 2,7 + 29,5 \times C + 2,9 \times Si + 6,9 \times Mn + 10,8 \times Cr + 30,3 \times Mo + 44,3 \times V \ldots (1)$$

$$Fn2 = \exp(0,76) \times \exp(0,05 \times C) \times \exp(1,35 \times Si) \times \exp(0,38 \times Mn) \times \exp(0,77 \times Cr) \times \exp(3,0 \times Mo) \times \exp(4,6 \times V) \ldots (2)$$

dans les formules (1) et (2), C, Si, Mn, Cr, Mo et V indiquent chacun la teneur en pourcent en masse de l'élément, dans laquelle la fraction de surface de structure perlitique d'une partie de rebord de la roue est de 95 % ou supérieure.

**2.** Roue selon la revendication 1, étant une roue de chemin de fer.

**3.** Roue selon l'une quelconque des revendications précédentes, dans laquelle la teneur est au moins une de (a) à (e) :

(a) la teneur en C est de 0,68 % ou supérieure et de 0,82 % ou inférieure ;
(b) la teneur en Mn est de 1,40 % ou inférieure ;
(c) la teneur en Cr est de 0,05 % ou supérieure et de 0,45 % ou inférieure ;
(d) la teneur en V est de 0,02 % ou supérieure et de 0,15 % ou inférieure ;
(e) la teneur en S est de 0,03 % ou inférieure et/ou de 0,005 % ou supérieure.

**4.** Roue selon l'une quelconque des revendications précédentes, dans laquelle Fn1 est égal à 36 ou supérieur.

**5.** Roue selon l'une quelconque des revendications précédentes, dans laquelle Fn2 est égal à 3 ou supérieur et/ou à 15 ou inférieur.

**6.** Roue selon l'une quelconque des revendications précédentes, dans laquelle la teneur en Mo est égale à 0,07 % ou inférieure et/ou à 0,02 % ou supérieure.

**7.** Roue selon l'une quelconque des revendications précédentes, dans laquelle la teneur en Al est égale à 0,15 % ou inférieure et/ou à 0,002 % ou supérieure.

**8.** Procédé de fabrication d'une roue selon la revendication 1 par réalisation successive des étapes de :

(1) fusion d'un acier présentant une composition chimique consistant en, en pourcent en masse, C : 0,65 à 0,84 %, Si : 0,02 à 0,40 %, Mn : 0,50 à 1,90 %, Cr : 0,02 à 0,50 %, V : 0,02 à 0,20 %, et S : 0,04 % ou inférieur, éventuellement au moins un choisi parmi 0,20 % ou inférieur de Mo, 0,20 % ou inférieur de Al, Cu : 0,20 % ou inférieur, et Ni : 0,20 % ou inférieur, dans lequel Fn1 exprimé par la formule (1) comme définie par la revendication 1 est de 35 à 43, et Fn2 exprimé par la formule (2) comme définie par la revendication 1 est de 25 ou inférieur, le reste étant Fe et des impuretés, et les impuretés contenant P : 0,05 % ou inférieur ; et coulée de l'acier en un lingot ;

(2) façonnage du lingot en une roue par forgeage à chaud ;

(3) trempe de bande de roulement de la roue en chauffant la roue à une température du point Ac3 au point Ac3 + 250°C, et refroidissement ;

(4) revenu de la roue.

**9.** Procédé selon la revendication 8, dans lequel la roue est une roue de chemin de fer.

**10.** Procédé selon la revendication 8 ou 9, dans lequel la teneur est au moins une de (a) à (e) :

(a) la teneur en C est de 0,68 % ou supérieure et de 0,82 % ou inférieure ;
(b) la teneur en Mn est de 1,40 % ou inférieure ;
(c) la teneur en Cr est de 0,05 % ou supérieure et de 0,45 % ou inférieure ;
(d) la teneur en V est de 0,02 % ou supérieure et de 0,15 % ou inférieure ;
(e) la teneur en S est de 0,03 % ou inférieure et/ou de 0,005 % ou supérieure.

**11.** Procédé selon l'une quelconque des revendications 8 à 10, dans lequel Fn1 est égal à 36 ou supérieur.

**12.** Procédé selon l'une quelconque des revendications 8 à 11, dans lequel Fn2 est égal à 3 ou supérieur et/ou à 15 ou inférieur.

**13.** Procédé selon l'une quelconque des revendications 8 à 12, dans lequel la teneur en Mo est égale à 0,07 % ou inférieure et/ou à 0,02 % ou supérieure.

**14.** Procédé selon l'une quelconque des revendications 8 à 13, dans lequel la teneur en Al est égale à 0,15 % ou inférieure et/ou à 0,002 % ou supérieure.

Figure 1

Figure 2

# Figure 3

# Figure 4

(a)

(b)

...

# Figure 5

(a)  (b)

# Figure 6

Wheel test specimen

Water lubrication

Rail test specimen

## Figure 7

## Figure 8

# Figure 9

# Figure 10

# Figure 11

# Figure 12

# Figure 13

Plate side

L/2

L

L/2

40mm

Tread

# Figure 14

Plate side

L/2

L

L/2

40mm

Tread

# Figure 15

Axle hole side

Plate side

L/2

L

L/2

W/2

W/2

W

# Figure 16

(b)

L/2

L

L/2

(a)

(C)

40mm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 50104717 A
- JP 2001158940 A
- JP 2005350769 A
- JP 2004315928 A
- JP 9202937 A
- US 7559999 A
- US 7591909 A
- JP S57143469 A

**Non-patent literature cited in the description**

- Technique for Improving Wear Resistance of Steel by Structure Control - Structure Control Technique for Wear-Resistant Steel having Weldability. **SADAHIRO YAMAMOTO.** 161st-162nd Nishiyama Memorial Seminar, Heisei 8th year. 221
- **TAKAYOSHI MURAKAMI.** Influence of Minute Defects and Inclusions. *Yokendo,* 2004, 182
- **KANETAKA.** *Japan Railway & Technical Review,* 2005, vol. 19 (9), 17